# EUROPÄISCHE PATENTSCHRIFT

(11) **EP 0 698 630 B1**
(45) Veröffentlichungstag und Bekanntmachung des Hinweises auf die Patenterteilung: **10.03.2004**
(21) Anmeldenummer: 95109604.9
(22) Anmeldetag: 21.06.1995
(51) Int. Cl.: C08G 59/24

(54) **Neuartige Epoxidharze, ihre Herstellung und Verwendung**
Epoxy resins, their preparation and use
Résines époxydes, leur préparation et utilisation

(30) Priorität: 30.06.1994 DE 4422869; 10.10.1994 DE 4436095
(43) Veröffentlichungstag der Anmeldung: 28.02.1996
(73) Patentinhaber: Surface Specialties Germany GmbH & Co. KG, 65203 Wiesbaden (DE)
(72) Erfinder: Neumann, Uwe, Dr., D-65307 Bad Schwalbach (DE); Hönel, Michael, Dr., D-65189 Wiesbaden (DE)
(74) Vertreter: Deckers, Hellmuth, Dr.

(56) Entgegenhaltungen:
- US-A- 5 300 618

## Beschreibung

Die Erfindung betrifft Epoxidharze aus aralkylierten Bisphenolverbindungen und Diepoxiden oder aus aralkylierten Diphenolen und Epichlorhydrin, ein Verfahren zu ihrer Herstellung sowie ihre Verwendung.

Harze mit Epoxidgruppen sind allgemein bekannt (H. Lee, K. Neville in "Handbook of Epoxy Resins", Reissue 1982, McGraw-Hill Book Company, New York; C. A. May in "Epoxy Resins", Marcel Dekker, Inc. New York and Basel, 1988). Sie lassen sich beispielsweise herstellen durch Umsetzung von mehrwertigen Phenolen mit Epichlorhydrin in Gegenwart von Natronlauge oder durch Addition von Bis-Phenolen an Bis-Epoxide. Diese relativ niedermolekularen Reaktivharze sind in Werkstoffanwendungen weit verbreitet, da ein hohes Maß an Variabilität der Eigenschaftsbilder durch Modifikation der Epoxid- und Phenol-Grundkörper erreichbar ist.

Die bekannten, technisch zugänglichen Epoxidharze sind sämtlich nicht oder nicht in ausreichendem Maß in aromatischen Lösungsmitteln löslich, sondern nur in den (erheblich teureren) aliphatischen Estern und Äthern wie z.B. Butylacetat, Methoxypropanol, Äthylenglykolmonobutyläther und Diäthylenglykoldimethyläther.

Es bestand daher die Aufgabe, Epoxidharze bereitzustellen, die in aromatischen Lösungsmitteln wie Xylol oder Toluol löslich sind, und dabei das hervorragende Eigenschaftsniveau der bekannten Epoxidharze bieten.

Diese Aufgabe konnte erfindungsgemäß gelöst werden, indem zumindest ein Teil der zur Herstellung der Epoxidharze üblicherweise verwendeten Bisphenole durch aralkylierte Bisphenolverbindungen ersetzt wurde.

Gegenstand der Erfindung sind daher Epoxidharze aus aralkylierten Bisphenolverbindungen, die an mindestens einem der aromatischen Ringe der Bisphenolverbindungen über jeweils einen linearen oder verzweigten, gegebenenfalls substituierten Alkylenrest mit mindestens einem Arylradikal verbunden sind, wobei die Bisphenolverbindungen ausgewählt sind aus Bisphenol A, Bisphenol F, Dihydroxydiphenyläther und Dihydroxydiphenylsulfon. Der Anteil dieser aralkylierten Bisphenolverbindungen liegt erfindungsgemäß zwischen 10 und 90 %, bevorzugt zwischen 20 und 80 %, und besonders bevorzugt zwischen 30 und 70 % der Gesamtmasse an Bisphenolverbindungen, die zur Herstellung des Epoxidharzes eingesetzt werden. Der restliche Anteil an Bisphenolverbindungen sind die üblicherweise eingesetzten, nicht aralkylierten Bisphenole. Ebenso ist es im Rahmen der Erfindung möglich, in Kombination mit den oben genannten Anteilen an aralkylierten Bisphenolverbindungen aliphatische Diole statt der unsubstituierten Bisphenole einzusetzen. Weiterhin ist es im Rahmen der Erfindung möglich, einen geringen Teil (bis zu 5 % der Stoffmenge) der Bisphenole und/oder der Diepoxidverbindungen zu ersetzen durch Polyphenole mit drei oder mehr Hydroxylgruppen bzw. Polyepoxidverbindungen, die drei oder mehr Epoxygruppen im Molekül enthalten. Ebenso kann ein geringer Teil (bis zu 5 % der Stoffmenge) der Bisphenole und/oder der Diepoxidverbindungen durch einwertige Phenole bzw. Monoepoxide ersetzt werden.

Insbesondere sind solche Epoxidharze Gegenstand der Erfindung, bei dem ein Teil der Bisphenolverbindungen im Mittel einen Aralkylrest trägt. Der Anteil dieser einfach substituierten Bisphenolverbindungen liegt erfindungsgemäß zwischen 10 und 90 %, bevorzugt zwischen 20 und 80 %, und besonders bevorzugt zwischen 30 und 70 % der Gesamtmasse an Bisphenolverbindungen, die zur Herstellung des Epoxidharzes eingesetzt werden.

Die Synthese der aralkylierten Bisphenolverbindungen, die für die erfindungsgemäßen Epoxidharze eingesetzt werden, ist in der gleichzeitig eingereichten deutschen Patentanmeldung P 44 36 097.5 beschrieben.

Die aralkylierten Bisphenolverbindungen, die für die Erfindung geeignet sind, sind Umsetzungsprodukte von Dihydroxyaromaten mit Aromaten, die eine Alkenylgruppe tragen. Dabei kann die Alkenylgruppe auch Bestandteil eines ankondensierten cycloaliphatischen Rings sein, der eine endocyclische oder exocyclische Doppelbindung enthält. Die Aralkylierung wird dabei vorzugsweise so geführt, daß das eingesetzte Bisphenol nach der Umsetzung im Mittel einen Aralkylrest trägt. Beispiele geeigneter aralkylierter Bisphenolverbindungen sind Umsetzungsprodukte von Bisphenol A, Bisphenol F, der isomeren Dihydroxybenzole und Dihydroxynaphthaline, von Dihydroxydiphenyläther und Dihydroxydiphenylsulfon. Geeignete Alkenylaromaten haben 8 bis 15 Kohlenstoffatome, und enthalten mindestens einen aromatischen Ring sowie genau eine Alkenylgruppe. Beispiele sind Styrol und seine Homologe, Isopropenylbenzol, Inden und Diphenyläthylen.

Die Umsetzung der aralkylierten Bisphenolverbindungen, gegebenenfalls in Abmischung mit unmodifizierten Bisphenolen, zu den entsprechenden Epoxidharzen kann auf verschiedene Arten erfolgen, wie dem Fachmann bekannt:
1.) Kettenverlängernde Addition (Taffy-Prozeß) mit Epichlorhydrin als Epoxidkomponente, wobei durch den Überschuß an Epichlorhydrin die mittlere Molmasse des Umsetzungsproduktes steuerbar ist. Gegebenenfalls kann ein weiterer Aufbau durch nachfolgende Addition von Bisphenolen erfolgen.
2.) Umsetzung mit Bisepoxiden (Diglycidyläthern), auch mit Mischungen von unterschiedlichen Diglycidyläthern als Epoxidkomponente, sogenannte "Advancement"-Reaktion, (vorzugsweise beträgt dabei die Molmasse der Diglycidylverbindungen pro 1 Epoxidgruppe im Mittel 100 bis 525 g/mol).

Bei allen Umsetzungen wird ein Restgehalt an Epoxidgruppen im Harz angestrebt, der einem "Epoxid-Äquivalentgewicht" (Molmasse dividiert durch Anzahl der Epoxidgruppen) von 180 bis 5000 g/mol, vorzugsweise von 230 bis 2000 g/mol entspricht.

Die für die Erfindung geeigneten Diglycidyläther haben eine zahlenmittlere Molmasse (Mn) von etwa 300 bis 7000 g/mol und ein Epoxid-Äquivalentgewicht von etwa 150 bis 3500 g/mol. Beispiele hierfür sind Umsetzungsprodukte von Epichlorhydrin oder Methylepichlorhydrin mit Bis-(hydroxyphenyl)-methan (Bisphenol F) oder 2,2-Bis-(4-hydroxyphenyl)-propan (Bisphenol A), Butan-1,4-diol, Hexan-1,6-diol, Bis(hydroxymethyl)-cyclohexan, Polyoxypropylenglykol mit einer durchschnittlichen Molmasse von 200 bis 4000 g/mol sowie mit Dihydroxy-benzophenon, Dihydroxy-naphthalin und Resorcin. Diepoxide mit geeigneter Molmasse werden entweder durch Auswahl der Mengenverhältnisse von Bisphenol und Epichlorhydrin oder durch Reaktion der monomeren Diglycidylverbindungen mit weiterem Bisphenol unter Zusatz von Katalysatoren wie Lewis-Säuren, Lewis-Basen oder Phosphoniumsalzen hergestellt. Im Rahmen der Erfindung lassen sich auch die oben beschriebenen aralkylierten Bisphenolverbindungen bei der Synthese der Diglycidylverbindungen einsetzen.

Eine ausführliche Aufzählung der geeigneten Epoxidverbindungen findet sich in dem Handbuch "Epoxidverbindungen und Harze" von A.M. Paquin, Springer Verlag Berlin 1958, Kapitel IV und in den oben genannten Handbüchern.

Die erfindungsgemäßen modifizierten Epoxidharze lassen sich in einem zweistufigen Verfahren darstellen, wobei in der ersten Stufe eine nicht aralkylierte Bisphenolkomponente in Gegenwart von schwachen Säuren bei Temperaturen von 100 bis 160 °C, bevorzugt von 120 bis 155 °C, mit der Alkenylaromaten-Komponente umgesetzt wird. Im zweiten Schritt wird mit einer Epoxidkomponente umgesetzt, wobei beide oben angeführten Verfahrensvarianten eingesetzt werden können.

In einem einstufigen Verfahren zur Herstellung der modifizierten Epoxidharze wird eine Mischung einer aralkylierten und einer nicht-aralkylierten Bisphenolverbindung gemeinsam mit einer Epoxidkomponente umgesetzt.

Als aralkylierte Bisphenolverbindung können die oben aufgeführten Bisphenolverbindungen einzeln oder in Mischung eingesetzt werden. Der Terminus "Bisphenolkomponente" umfaßt im Rahmen der Erfindung auch den Zusatz von drei- oder mehrwertigen Phenolen, sowie einwertiger Phenole in geringer Menge zu den Bisphenolverbindungen. Die Zusatzmenge beträgt jeweils weniger als 5 %, bevorzugt weniger als 2 %, bezogen auf die Stoffmenge der Bisphenolverbindung.

Die erfindungsgemäßen modifizierten Epoxidharze lassen sich beispielsweise zur Herstellung von Gießharzen, Klebstoffen und Spritzgußmassen verwenden, besonders auch als Konstruktionsharze, gegebenenfalls in Kombination mit üblichen inerten Füllstoffen, wie Kreide, Kaolin, Holzmehl, Glimmer oder Glaskugeln, oder mit faserförmigen Verstärkungsstoffen wie Glas-, Aramid-, Kohle- oder Metallfasern.

In den nachfolgenden Beispielen bedeuten alle Gehalt-, Teile- und ProzentAngaben jeweils Massengehalte, sofern nicht ausdrücklich anders vermerkt.

### Beispiele:

| **Beispiel 1:** | | |
|---|---|---|
| A | Bisphenol F | 200 g ( 1,0 mol ) |
| B | Oxalsäure-di-hydrat | 2,2 g |
| C | Borsäure | 1,15g |
| D | Styrol | 104 g ( 1,0 mol) |
| E | Beckopox EP 140 # | 613,5 g (3,35 val) |
| F | Triphenylphosphan | 2,1 g |

| | | |
|---|---|---|
| # Beckopox® EP 140 ist ein Flüssigharz der Hoechst AG auf Basis Bisphenol A. | | |

Zu A gibt man unter Stickstoff bei 120 °C B und C. Anschließend erfolgt die Zugabe an D bei anfangs 120 °C in der Weise, daß die Temperatur der nun folgenden exothermen Reaktion durch die Zutropfgeschwindigkeit zwischen 120 °C und 160 °C (maximale Temperatur!) gehalten wird. Nach Ablauf der Zugabe wird zwei Stunden bei 160 °C gehalten, dabei wird der Umsetzungsgrad anhand von Festkörperbestimmungen kontrolliert (2g Substanz/2g Xylol; 1h bei 160 °C im Umluftofen). Nach Abkühlen auf 120 °C erfolgt die Zugabe von E, gefolgt von F. Bei der nun einsetzenden Reaktion steigt die Temperatur auf 160 bis 170 °C. Bis zum Erreichen des theoretischen Epoxidäquivalentgewichtes wird bei 160 °C gehalten.

| | |
|---|---|
| Epoxidäquivalentgewicht | 670 bis 690 g/mol |
| Viskosität bei 25 °C / 40%ig in Butyldiglykol | 480 bis 510 mPa.s |

| **Beispiel 2:** | | |
|---|---|---|
| A | Bisphenol A | 228 g ( 1,0 mol) |
| B | Oxalsäure-di-hydrat | 4,2 g |
| C | Borsäure | 1,15 g |
| D | Styrol | 208 g ( 2,0 mol) |
| E | Epichlorhydrin | 650 g |
| F | Tetramethylammoniumchlorid | 2,1 g |
| G | VE-Wasser | 2,1 g |
| H | VE-Wasser | 10 g |
| I | VE-Wasser | 460 g |
| J | Xylol | 500 g |
| K | Phosphorsäure, 10%ig | siehe Text |

Zu A gibt man unter Stickstoff bei 160 °C B und C. Anschließend erfolgt die Zugabe an D bei anfangs 160 °C in der Weise, daß die Temperatur der nun folgenden exothermen Reaktion durch die Zutropfgeschwindigkeit zwischen 155 °C und 165 °C gehalten wird. Nach Ablauf der Zugabe wird zwei Stunden bei 160 °C gehalten, dabei wird der Umsetzungsgrad anhand von Festkörperbestimmungen kontrolliert (2g Substanz/2g Xylol; 1h bei 160 °C im Umluftofen). Eventuell sind weitere Zugabemengen von Oxalsäure erforderlich. Nach Abkühlen auf 100 °C wird die Schmelze mit E aufgenommen, gefolgt von F gelöst in G bei 60 °C. Nach 60 Minuten Rühren bei 70 °C erfolgt in 120 Minuten die Zugabe von H bei 80 °C und ca. 500 hPa in der Weise, daß eine gleichzeitige azeotrope Entwässerung stattfindet. Danach wird unter Vakuum und Temperatursteigerung Epichlorhydrin abdestilliert (maximale Temperatur: 120 ° C, Reduzieren des Druckes auf 50 hPa). Man beläßt 30 Minuten bei 120 °C und 50 hPa und gibt dann unter gleichen Bedingungen in 30 Minuten H hinzu. Man kühlt unter 100 °C, hebt das Vakuum auf, setzt dann I hinzu und rührt intensiv 15 Minuten lang bei 95 °C. Die wäßrige Phase wird abgetrennt. Unter Rühren wird, bezogen auf den gemessenen Gehalt an hydrolysierbarem Chlor, die anderthalbfache Menge an 4%iger Natronlauge zugesetzt. Bei 90 °C wird 90 Minuten lang verrührt. Man löst in J und trennt die wäßrige Phase ab. Mit K wird ein pH-Wert zwischen 6,0 und 7,2 eingestellt, man entwässert unter azeotropen Bedingungen, zieht noch ca. 50 ml Xylol ab und filtriert. Unter Vakuum (bis 50 hPa) und bei maximal 150 °C wird das Lösemittel entfernt.

| | |
|---|---|
| Epoxidäquivalentgewicht | 290 bis 295 g/mol |
| Gesamt-Chlor-Gehalt | < 0,4 % |
| Gehalt an hydrolysierbarem Chlor | < 0,1 % |
| Viskosität bei 25 °C | 55.000 mPa.s |

| **Beispiel 3: (Vergleichsbeispiel)** | | |
|---|---|---|
| A | Resorcin | 110 g ( 1,0 mol ) |
| B | Oxalsäure-di-hydrat | 2,2 g |
| C | Borsäure | 1,15g |
| D | Styrol | 130 g ( 1,25 mol) |
| E | Beckopox EP 140 # | 580 g (3,17 val) |
| F | Triphenylphosphan | 1,5 g |

| | | |
|---|---|---|
| # Beckopox® EP 140 ist ein Flüssigharz der Hoechst AG auf Basis Bisphenol A. | | |

Zu A gibt man unter Stickstoff bei 120 °C B und C. Anschließend erfolgt die Zugabe an D bei anfangs 120 °C in der Weise, daß die Temperatur der nun folgenden exothermen Reaktion durch die Zutropfgeschwindigkeit zwischen 120 °C und 130 °C (maximale Temperatur!) gehalten wird. Nach Ablauf der Zugabe wird zwei Stunden bei 160 °C gehalten, dabei wird der Umsetzungsgrad anhand von Festkörperbestimmungen kontrolliert (2g Substanz/2g Xylol; 1h bei 160 °C im Umluftofen). Nach Abkühlen auf 120 °C erfolgt die Zugabe von E, gefolgt von F. Bei der nun einsetzenden Reaktion steigt die Temperatur auf 160 bis 170 °C. Bis zum Erreichen des theoretischen Epoxidäquivalentgewichtes wird bei 160 °C gehalten.

| | |
|---|---|
| Epoxidäquivalentgewicht | 715 - 745 g/mol |
| Viskosität bei 25 °C / 40%ig in Butyldiglykol | 720 - 750 mPa.s |

| **Beispiel 4:** | | |
|---|---|---|
| A | Bisphenol A | 228 g ( 1,0 mol ) |
| B | Oxalsäure-di-hydrat | 2,2 g |
| C | Borsäure | 1,15g |
| D | Styrol | 104 g ( 1,0 mol) |
| E | Harz aus Beispiel 2 | 744 g (2,54 val) |
| F | Triphenylphosphan | 5,0 g |

Zu A gibt man unter Stickstoff bei 160 °C B und C. Anschließend erfolgt die Zugabe von D bei anfangs 160 °C in der Weise, daß die Temperatur der nun folgenden exothermen Reaktion durch die Zutropfgeschwindigkeit zwischen 155 °C und 165 °C (maximale Temperatur!) gehalten wird. Nach Ablauf der Zugabe wird zwei Stunden bei 160 °C gehalten, dabei wird der Umsetzungsgrad anhand von Festkörperbestimmungen kontrolliert (2g Substanz/2g Xylol/ 1h bei 160 °C im Umluftofen). Eventuell sind Nachgaben von Oxalsäure erforderlich. Nach Abkühlen auf 120 °C erfolgt die Zugabe von E, gefolgt von F in mehreren Portionen. Bei der nun einsetzenden Reaktion steigt die Temperatur auf 160 bis 170 °C. Bis zum Erreichen des theoretischen Epoxidäquivalentgewichtes wird bei 160 °C gehalten.

| | |
|---|---|
| Epoxidäquivalentgewicht | 2000 bis 2400 g/mol |
| Viskosität bei 25 °C / 40%ig in Butyldiglykol | 2.100 - 3.000 mPa.s |

| **Beispiel 5:** | | |
|---|---|---|
| A | Bisphenol F | 200 g ( 1,0 mol ) |
| B | Oxalsäure-di-hydrat | 2,2 g |
| C | Borsäure | 1,15g |
| D | Inden | 116 g ( 1,0 mol) |
| E | Beckopox EP 140 # | 608 g (3,32 val) |
| F | Triphenylphosphan | 4,1 g |

| | | |
|---|---|---|
| # Beckopox® EP 140 ist ein Flüssigharz der Hoechst AG auf Basis Bisphenol A. | | |

Zu A gibt man unter Stickstoff bei 120 °C B und C. Anschließend erfolgt die Zugabe an D bei anfangs 120 °C in der Weise, daß die Temperatur der nun folgenden exothermen Reaktion durch die Zutropfgeschwindigkeit zwischen 120 °C und 160 °C (maximale Temperatur!) gehalten wird. Nach Ablauf der Zugabe wird zwei Stunden bei 160 °C gehalten, dabei wird der Umsetzungsgrad anhand von Festkörperbestimmungen kontrolliert (2g Substanz/2g Xylol; 1 h bei 160 °C im Umluftofen). Nach Abkühlen auf 120 °C erfolgt die Zugabe von E, gefolgt von F. Bei der nun einsetzenden Reaktion steigt die Temperatur auf 160 bis 170 °C. Bis zum Erreichen des theoretischen Epoxidäquivalentgewichtes wird bei 160 °C gehalten.

| | |
|---|---|
| Epoxidäquivalentgewicht | 705 bis 735 g/mol |
| Viskosität bei 25 °C / 40%ig in Butyldiglykol | 550 bis 580 mPa.s |

## Patentansprüche

1. Epoxidharze aus aralkylierten Bisphenolverbindungen, die an mindestens einem der aromatischen Ringe über jeweils einen linearen oder verzweigten, gegebenenfalls substituierten Alkylenrest mit mindestens einem Arylradikal verbunden sind, wobei die Bisphenolverbindungen ausgewählt sind aus Bisphenol A, Bisphenol F, Dihydroxydiphenyläther und Dihydroxydiphenylsulfon.

2. Epoxidharze nach Anspruch 1, wobei aralkylierte Bisphenolverbindungen verwendet werden in einem Anteil zwischen 10 und 90 % der Gesamtmasse an Bisphenolverbindungen, die zur Herstellung des Epoxidharzes eingesetzt werden.

3. Epoxidharze nach Anspruch 1 aus aralkylierten Bisphenolverbindungen, wobei ein Teil der Bisphenolverbindungen im Mittel einen Aralkylsubstituenten trägt.

4. Epoxidharze nach Anspruch 3, **dadurch gekennzeichnet, daß** der Aralkylsubstituent ausgewählt ist aus Aralkylradikalen mit 8 bis 15 Kohlenstoffatomen.

5. Zweistufiges Verfahren zur Herstellung von modifizierten Epoxidharzen, **dadurch gekennzeichnet, daß** in der ersten Stufe die Bisphenolverbindung mit der Alkenylaromaten-Komponente in Gegenwart einer schwachen Säure umgesetzt wird, und anschließend gegebenenfalls nach Zugabe einer weiteren Menge derselben oder einer anderen Bisphenolverbindung mit einer Epoxidkomponente umgesetzt wird, wobei die Bisphenolverbindungen ausgewählt sind aus Bisphenol A, Bisphenol F, Dihydroxydiphenyläther und Dihydroxydiphenylsulfon.

6. Einstufiges Verfahren zur Herstellung von modifizierten Epoxidharzen, **dadurch gekennzeichnet, daß** eine Mischung einer aralkylierten Bisphenolverbindung und einer nicht-aralkylierten Bisphenolverbindung gemeinsam mit einer Epoxidkomponente umgesetzt wird, wobei die Bisphenolverbindungen ausgewählt sind aus Bisphenol A, Bisphenol F, Dihydroxydiphenyläther und Dihydroxydiphenylsulfon.

7. Modifizierte Epoxidharze, hergestellt nach einem der Verfahren gemäß Anspruch 5 oder 6.

8. Verwendung modifizierter Epoxidharze nach den Ansprüchen 1, 2 und 7 zur Herstellung von Gießharzen, Klebstoffen, Spritzgußmassen, gefüllten und (faser)verstärkten Konstruktionsharzen.

## Claims

1. An epoxy resin comprising an aralkylated bisphenol compound which is attached, at at least one of the aromatic rings and by way of in each case a linear or branched, substituted or unsubstituted alkylene radical, to at least one aryl radical, the bisphenol compound being selected from bisphenol A, bisphenol F, dihydroxydiphenyl ether and dihydroxydiphenyl sulfone.

2. An epoxy resin as claimed in claim 1, the aralkylated bisphenol compound being used in a proportion of between 10 and 90% of the overall mass of bisphenol compound which is employed to prepare the epoxy resin.

3. An epoxy resin as claimed in claim 1, comprising an aralkylated bisphenol compound, part of the bisphenol compound carrying on average one aralkyl substituent.

4. An epoxy resin as claimed in claim 3, wherein the aralkyl substituent is selected from aralkyl radicals having 8 to 15 carbon atoms.

5. A two-stage process for the preparation of modified epoxy resins, which comprises reacting, in the first stage, the bisphenol compound with the alkenylaromatic component in the presence of a weak acid, and subsequently, if desired after adding a further quantity of the same or of a different bisphenol compound, reacting the product with an epoxide component, the bisphenol compound being selected from bisphenol A, bisphenol F, dihydroxydiphenyl ether and dihydroxydiphenyl sulfone.

6. A one-stage process for the preparation of modified epoxy resins, which comprises reacting a mixture of an aralkylated bisphenol compound and a nonaralkylated bisphenol compound with an epoxide component, the bisphenol compound being selected from bisphenol A, bisphenol F, dihydroxydiphenyl ether and dihydroxydiphenyl sulfone.

7. A modified epoxy resin prepared by a process as claimed in claim 5 or 6.

8. The use of a modified epoxy resin as claimed in any one of claims 1, 2 and 7 for the production of casting resins, adhesives, injection molding compounds, filled and (fiber-)reinforced construction resins.

## Revendications

1. Résines époxyde de composés bisphénol aralkylés, qui sont liés sur au moins un des cycles aromatiques via respectivement un groupe alkylène linéaire ou ramifié, éventuellement substitué avec au moins un radical aryle, dans lesquelles les résines bisphénol sont choisies parmi le bisphénol A, le bisphénol F, le dihydroxydiphényléther et la dihydroxydiphénylsulfone.

2. Résines époxyde selon la revendication 1, dans lesquelles on utilise les composés bisphénol aralkylés en une proportion comprise entre 10 et 90 % de la masse globale de composés bisphénol, qui sont utilisés pour la préparation de la résine époxyde.

3. Résines époxyde selon la revendication 1 à base de composés bisphénol aralkylés, dans lesquelles une partie des composés bisphénols porte en moyenne un substituant aralkyle.

4. Résines époxyde selon la revendication 3, **caractérisées en ce que** l'on choisit le substituant aralkyle parmi les radicaux aralkyle avec de 8 à 15 atomes de carbone.

5. Procédé en deux étapes pour la préparation de résines époxyde modifiées, **caractérisé en ce que** l'on met à réagir dans la première étape le composé bisphénol avec le composant alcénylaromatique en présence d'un acide faible, et ensuite on met à réagir après ajout d'une autre quantité d'un composé bisphénol identique ou différent avec un composant époxyde, dans lequel les composés bisphénol sont choisis parmi le bisphénol A, le bisphénol F, le dihydroxydiphényléther et la dihydroxydiphénylsulfone.

6. Procédé en une étape pour la préparation de résines époxyde modifiées, **caractérisé en ce que** l'on met à réagir un mélange d'un composé bisphénol aralkylé et d'un composé bisphénol non aralkylé ensemble avec un composant époxyde, dans lequel les composés bisphénol sont choisis parmi le bisphénol A, le bisphénol F, le dihydroxydiphényléther et la dihydroxydiphénylsulfone.

7. Résines époxyde modifiées, préparées selon l'un des procédés selon la revendication 5 ou 6.

8. Utilisation de résines époxyde modifiées selon les revendications 1, 2 et 7 pour la préparation de résines de moulage, de colles, de matières de moulage par injection, de résines pour la construction chargées et renforcées (par des fibres).
